(19) Europäisches Patentamt
European Patent Office
Office européen des brevets

(11) **EP 1 339 784 B1**

(12) **EUROPÄISCHE PATENTSCHRIFT**

(45) Veröffentlichungstag und Bekanntmachung des Hinweises auf die Patenterteilung:
**15.02.2006 Patentblatt 2006/07**

(21) Anmeldenummer: **01994631.8**

(22) Anmeldetag: **02.11.2001**

(51) Int Cl.:
**C08L 21/00** *(2006.01)*      **C08L 19/00** *(2006.01)*
**B60C 1/00** *(2006.01)*

(86) Internationale Anmeldenummer:
**PCT/EP2001/012674**

(87) Internationale Veröffentlichungsnummer:
**WO 2002/040586 (23.05.2002 Gazette 2002/21)**

(54) **GELHALTIGE KAUTSCHUKMISCHUNGEN MIT ANORGANISCHEN PEROXIDEN**

RUBBER COMPOUNDS THAT CONTAIN GELS AND INORGANIC PEROXIDES

MELANGES DE CAOUTCHOUC CONTENANT DES PEROXYDES INORGANIQUES

(84) Benannte Vertragsstaaten:
**DE ES FR GB IT**

(30) Priorität: **14.11.2000 DE 10056311**

(43) Veröffentlichungstag der Anmeldung:
**03.09.2003 Patentblatt 2003/36**

(73) Patentinhaber: **LANXESS Deutschland GmbH
51369 Leverkusen (DE)**

(72) Erfinder:
• **OBRECHT, Werner
  47447 Moers (DE)**
• **SUMNER, Anthony
  Hythe
  Southhampton S045 6DT (GB)**

(56) Entgegenhaltungen:
**EP-A- 0 313 917          EP-A- 0 854 170
GB-A- 966 260**

**Beschreibung**

Die vorliegende Erfindung betrifft Kautschukmischungen, die vernetzte Kautschukpartikel (sogenannte Kautschukgele) sowie Metall-Peroxide neben den üblichen Mischungsbestandteilen enthalten und sich im unvernetzten Zustand durch gute Verarbeitbarkeit (Compoundviskosität - ML 1+4/100°C) und im vulkanisierten Zustand durch verbesserte mechanische Eigenschaften insbesondere in Bezug auf das Produkt aus Spannungswert bei 100 % Dehnung und Bruchdehnung ($S_{100}$ x D) sowie durch verbesserte Zugfestigkeiten auszeichnen. Darüber hinaus besitzen die aus den erfindungsgemäßen Kautschukmischungen hergestellten Vulkanisate eine niedrigere Dichte, was sich vorteilhaft auf das Gewicht der aus den Vulkanisaten hergestellten Kautschukformkörper, insbesondere bei Reifen bzw. bei Reifenteilen, auswirkt.

Es ist bekannt, dass Kautschukmischungen aus unvernetzten Kautschuken und vernetzten Kautschukpartikeln (Kautschukgele) ein niedriges spezifisches Gewicht und niedrige Mischungsviskositäten aufweisen und bei der Vulkanisation mit üblichen Vulkanisationsmitteln (z.B. Schwefelvulkanisation) Vulkanisate ergeben, die hohe Rückprallelastizitäten bei 70°C und daher eine niedrige Dämpfung unter Gebrauchsbedingungen aufweisen.

Verwiesen wird in diesem Zusammenhang beispielsweise auf US-A 5 124 408, US-A 5 395 891, DE-A 197 01 488.7, DE-A 197 01 487.9, DE-A 199 29 347.3, DE-A 199 39 865.8, DE-A 199 42 620.1 und DE-A 19701487.

Für den technischen Einsatz sind die mechanischen Eigenschaften gelhaltiger Kautschukvulkanisate insbesondere aufgrund schlechter Reißfestigkeiten und einer mangelhaften Verstärkungswirkung der Mikrogele nicht ausreichend. Insbesondere ist eine Verbesserung des Produkts $S_{100}$ x D aus Spannungswerts bei 100 % Dehnung ($S_{100}$) und Bruchdehnung (D) sowie der Reißfestigkeit (F) notwendig. Diese Verbesserungen sollen erreicht werden, ohne dass die vorteilhaften Mischungsviskositäten der unvulkanisierten Kautschukmischungen signifikant verschlechtert werden.

Die Verwendung von Metallperoxiden in Kombination mit Schwefel zur Vernetzung carboxylgruppenhaltiger Kautschuke wie z.B. carboxylierten Nitrilkautschuks ist aus US-A 3403136 bekannt. In diesem Patent wird die Verbesserung der mechanischen Eigenschaften gelhaltiger Kautschukcompounds jedoch nicht gelehrt.

Aus US-A 2765018 ist bekannt Butylkautschuk mit anorganischen Peroxiden umzusetzen. Nach der Lehre dieses Patents erfolgt nur eine unvollständige Vulkanisation ("partially cured"). Aus diesem Patent ist nicht zu entnehmen, wie die mechanischen Eigenschaften vollständig vernetzter gelhaltiger Kautschukcompounds verbessert werden könnten.

Gemäß EP-A 313 917 werden carboxylgruppenfreie Kautschuke mit Vulkanisationssystemen, die Schwefel und Peroxide von Metallen enthalten, vulkanisiert. Nicht gelehrt wird die Vernetzung von Compounds, die Kautschukpartikel enthalten.

Es bestand daher die technische Notwendigkeit, Maßnahmen zur Erhöhung des mechanischen Werteniveaus gelhaltiger Kautschukvulkanisate insbesondere der Reißfestigkeit und des Produkts aus Spannungswert bei 100 % Dehnung und Bruchdehnung ($S_{100}$ x D) zu finden, wobei durch diese Maßnahmen die Compoundviskosität der unvulkanisierten Mischungen nicht signifikant verschlechtert werden sollten.

Gegenstand der vorliegenden Erfindung sind daher Kautschukmischungen aus mindestens einem doppelbindungshaltigen Kautschuk (A), mindestens einem Kautschukgel (B) sowie mindestens einem Metall-Peroxid (C), wobei der doppelbindungshaltige Kautschuk (A) in Mengen von 100 Gew.-Teilen, das Kautschukgel (B) in Mengen von 10 bis 150, bevorzugt 20 bis 120 Gew.-Teilen, und das Peroxid (C) in Mengen von 0,1 bis 30, bevorzugt 0,5 bis 15 Gew.-Teilen, vorhanden sind.

Die erfindungsgemäßen Kautschukmischungen können selbstverständlich noch die bekannten Kautschukfüllstoffe und Kautschukhilfsmittel sowie Vernetzer enthalten.

Bestandteil (A) der erfindungsgemäßen Kautschukmischungen sind doppelbindungshaltige Kautschuke, die nach DIN/ISO 1629 als R-Kautschuke bezeichnet werden. Diese Kautschuke haben in der Hauptkette eine Doppelbindung. Hierzu gehören beispielsweise:

| | |
|---|---|
| NR: | Naturkautschuk |
| IR: | Polyisopren |
| SBR: | Styrol/Butadienkautschuk |
| BR: | Polybutadienkautschuk |
| SIBR: | Styrol/Isopren/Butadienkautschuk |
| NBR: | Nitrilkautschuk |
| IIR: | Butylkautschuk |
| BIIR: | bromierte Isobutylen/Isopren-Copolymerisate mit Bromgehalten von 0,1-10 Gewichtsprozent |
| CIIR: | chlorierte Isobutylen/Isopren-Copolymerisate mit Chlorgehalten von 0,1-10 Gewichtsprozent |
| HNBR: | Hydrierter bzw. teilhydrierter Nitrilkautschuk |
| SNBR: | Styrol/Butadien/Acrylnitril-Kautschuk |
| CR: | Polychloropren |

ENR:      Epoxydierter Naturkautschuk oder Mischungen davon

X-NBR:    carboxylierte Nitrilkautschuke

X-SBR:    carboxylierte Styrol-Butadien-Copolymerisate.

Bevorzugt sind: NR, BR, SBR und SIBR.

Unter doppelbindungshaltigen Kautschuken sollen aber auch solche Kautschuke verstanden werden, die nach DIN/ISO 1629 als M-Kautschuke bezeichnet werden und neben der gesättigten Hauptkette Doppelbindungen in der Seitenkette aufweisen. Hierzu gehört z.B. EPDM.

Die in die erfindungsgemäßen Kautschukmischungen einzusetzenden doppelbindungshaltigen Kautschuke der oben genannten Art können selbstverständlich durch solche funktionelle Gruppen modifiziert sein, die mit Zinkperoxid reagieren und die Ankopplung der vernetzten Kautschukpartikel an die umgebende Kautschukmatrix im vulkanisierten Zustand zu verbessern vermögen.

Besonders bevorzugt sind insbesondere solche nicht vernetzten Kautschuke, die durch Hydroxyl-, Carboxyl-, Amino-, Amid- und/oder Epoxidgruppen funktionalisiert sind. Die Einführung funktioneller Gruppen kann direkt bei der Polymerisation durch Copolymerisation mit geeigneten Comonomeren oder nach der Polymerisation durch Polymermodifikation erfolgen.

Die Einführung solcher funktioneller Gruppen durch Polymermodifikation ist bekannt und beispielsweise beschrieben in M.L. Hallensleben "Chemisch modifizierte Polymere" in Houben-Weyl Methoden der Organischen Chemie, 4. Auflage, "Makromolekulare Stoffe" Teil 1-3; Georg Thieme Verlag Stuttgart, New York, 1987; S. 1994-2042, DE-A 2 653 144, EP-A 464 478, EP-A 806 452 und DE-A 198 32 459.6.

Die Menge an funktionellen Gruppen in den Kautschuken beträgt üblicherweise 0,05 bis 25 Gew.-%, bevorzugt 0,1 bis 10 Gew.-%.

Bestandteil (B) der erfindungsgemäßen Kautschukmischungen sind vernetzte Kautschukpartikel, sogenannte Kautschukgele oder Mikrogele, die durch entsprechende Vernetzung folgender Kautschuke erhalten werden:

NR:          Naturkautschuk,

BR:          Polybutadien,

ABR:        Butadien/Acrylsäure-$C_{1-4}$-Alkylestercopolymere,

IR:           Polyisopren,

SBR:        Styrol-Butadien-Copolymerisate mit Styrolgehalten von 1-60, vorzugsweise 5-50 Gewichtsprozent,

SIBR:      Styrol/Isopren/Butadienkautschuk

X-SBR:     carboxylierte Styrol-Butadien-Copolymerisate

FKM:        Fluorkautschuk,

ACM:       Acrylatkautschuk,

NBR:        Polybutadien-Acrylnitril-Copolymerisate mit Acrylnitrilgehalten von 5-60, vorzugsweise 10-50 Gewichtsprozent,

X-NBR:    carboxlierte Nitrilkautschuke,

ENR         epoxydierter Naturkautschuk

CR:          Polychloropren

IIR:           Isobutylen/Isopren-Copolymerisate mit Isoprengehalten von 0,5-10 Gewichtsprozent,

BIIR:      bromierte Isobutylen/Isopren-Copolymerisate mit Bromgehalten von 0,1-10 Gewichtsprozent,

CIIR:      chlorierte Isobutylen/Isopren-Copolymerisate mit Bromgehalten von 0,1-10 Gewichtsprozent,

HNBR:    teil- und vollhydrierte Nitrilkautschuke

EPM:       Ethylen-Propylen-Copolymerisate

EPDM:    Ethylen-Propylen-Dien-Terpolymerisate,

EAM:       Ethylen/Acrylatcopolymere,

EVM:       Ethylen/Vinylacetatcopolymere

CO und ECO:  Epichlorhydrinkautschuke,

Q:           Silikonkautschuke,

AU:         Polyesterurethanpolymerisate,

EU:         Polyetherurethanpolymerisate.

Bevorzugt sind: BR, NR, SBR, NBR und CR.

Die erfindungsgemäß einzusetzenden Kautschukpartikel besitzen üblicherweise Teilchendurchmesser von 5 bis 1000 nm, bevorzugt 10 bis 600 nm (Durchmesserangaben nach DIN 53 206).

Aufgrund ihrer Vernetzung sind sie (nahezu) unlöslich und in geeigneten Fällmitteln, z.B. Toluol, quellbar. Der (unlösliche) Gelanteil der Kautschukpartikel beträgt üblicherweise 80 bis 100 Gew.-%, bevorzugt 90 bis 100 Gew.-%. Der Quellungsindex der Kautschukpartikel (QI) in Toluol beträgt ca. 1 bis 15, vorzugsweise 1 bis 10.

Der Quellungsindex QI wird definiert als:

$$QI = \frac{\text{Nassgewicht des toluolhaltigen Gels}}{\text{Trockengewicht des Gels}} \ .$$

Zur Ermittlung von Gelgehalt und Quellungsindex lässt man 250 mg Gel in 25 ml Toluol 24 h unter Schütteln quellen. Der (unlösliche) Gelanteil wird mit 20 000 Upm abzentrifugiert und gewogen (Nassgewicht des toluolhaltigen Gels) und anschließend bei 70°C bis zur Gewichtskonstanz getrocknet und nochmals gewogen (Trocknungsgewicht des Gels).

Die Herstellung der einzusetzenden vernetzten Kautschukpartikel (Kautschukgele) aus den zugrundeliegenden Kautschuken der zuvor genannten Art, ist prinzipiell bekannt und beispielsweise beschrieben in US-A 5 395 891 und EP-A 981 000 49.

Außerdem ist es möglich, die Teilchengrößen der Kautschukpartikel durch Agglomeration zu vergrößern. Auch die Herstellung von Kieselsäure/Kautschuk-Hybridgelen durch Coagglomeration ist beispielsweise beschrieben in DE-A 199 39 865.8.

Selbstverständlich können die vernetzten Kautschukpartikel wie die zuvor erwähnten nicht vernetzten doppelbindungshaltigen Kautschuke ebenfalls durch geeignete funktionelle Gruppen modifiziert sein, die - wie zuvor erwähnt - mit Zinkperoxid zu reagieren vermögen und/oder eine Verbesserung der Ankopplung der Kautschukpartikel an die umgebende Kautschukmatrix im vulkanisierten Zustand bewirken.

Besonders bevorzugt werden in den erfindungsgemäßen Kautschukmischungen modifizierte vernetzte Kautschukpartikel eingesetzt, die an der Oberfläche durch Hydroxyl-; Carboxyl-; -Amino-; Amido- sowie durch Epoxid-Gruppen modifiziert sind und in dem zuvor erwähnten Mengenbereich liegen.

Die Modifizierung der vernetzten Kautschukpartikeln (Kautschukgelen) und die Einführung der zuvor genannten funktionellen Gruppen ist dem Fachmann ebenfalls bekannt und beispielsweise beschrieben in DE-A 199 19 459.9, DE-A 199 29 347.3, DE-A 198 34 804.5.

Zu erwähnen sei an dieser Stelle nur die Modifizierung der entsprechenden Kautschuke bzw. Kautschukgele in wässriger Dispersion mit entsprechenden polaren Monomeren, die eine Hydroxyl-, Amino-, Amido- Carboxyl- und/oder Epoxidgruppe einzuführen vermögen.

Bestandteil (C) der Kautschukmischungen sind Peroxide der Metalle aus den Gruppen Ia, Ib, IIa und IIb des Periodensystems der Elemente. Bevorzugte Metallperoxide sind: Natriumpemxid, Calciumperoxid, Bariumperoxid und Zinkperoxid, wobei Zinkperoxid bevorzugt ist. Diese Peroxide können in reiner oder in phlegmatisierter Form eingesetzt werden. Übliche Phlegmatisierimgsmittel sind die Oxide, Hydroxide und Carbonate der entsprechenden Metalle. Handelsübliches Zinkperoxid der Fa. Riedel-de Haen enthält z.B. neben ca. 55 Gew.-% Zinkperoxid noch zusätzlich Zinkoxid neben geringen Mengen an Zinkcarbonat und Zinkhydroxid.

Die erfindungsgemäßen Kautschukmischungen können neben den Mischungsbestandteilen (A), (B) und (C) noch weitere Füllstoffe und/oder Kautschukhilfsmittel und/oder Vernetzer enthalten.

Besonders geeignete Füllstoffe zur Herstellung der erfindungsgemäßen Kautschukmischungen und -vulkanisate sind z.B.:

- Ruße. Die hierbei zu verwendenden Ruße sind nach dem Flammruß-, Furnace- oder Gasrußverfahren hergestellt und besitzen BET-Oberflächen von 20-200 $m^2$/g wie z.B: SAF-, ISAF-, IISAF-, HAF-, FEF- oder GPF-Ruße.

- Kieselsäure, hergestellt z.B. durch Fällung von Lösungen von Silikaten oder Flammhydrolyse von Siliciumhalogeniden mit spezifischen Oberflächen von 5-1000, vorzugsweise 20-400 $m^2$/g (BET-Oberfläche) und Primärteilchengrößen von 5-400 nm. Die Kieselsäuren können gegebenenfalls auch als Mischoxide mit anderen Metalloxiden, wie Al-, Mg-, Ca-, Ba, Zn- und Ti Oxiden vorliegen.

- synthetische Silikate, wie Aluminiumsilikat, Erdalkalisilikat, wie Magnesiumsilikat oder Calciumsilikat mit BET-Oberflächen von 20-400 $m^2$/g und Primärteilchendurchmessem von 5-400 nm.

- natürliche Silikate, wie Kaolin und andere natürlich vorkommende Kieselsäuren.

- Metalloxide, wie Zinkoxid, Calciumoxid, Magnesiumoxid, Aluminiumoxid.

- Metallcarbonate, wie Calciumcarbonat, Magnesiumcarbonat, Zinkcarbonat.

- Metallsulfate, wie Calciumsulfat, Bariumsulfat.

- Metallhydroxide, wie Aluminiumhydroxid und Magnesiumhydroxid.

- Glasfasern und Glasfaserprodukte (Latten, Stränge oder Mikroglaskugeln).

- Thermoplastfasern (Polyamid, Polyester, Aramid)

- Thermoplastische Füllstoffe, wie Polyethylen, Polypropylen, Polytetrafluorethylen, syndiotaktisches 1,2-Polybutadien, trans-1,4-Polybutadien, syndiotaktisches Polystyrol sowie Polycarbonat.

Als Kautschukhilfsmittel kommen z.B. in Betracht: Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Harze, Streckmittel, organische Säuren, Verzögerer, Metalloxide, sowie Füllstoffaktivatoren, wie beispielsweise Triethanolamin, Polyethylenglykol, Hexantriol sowie Bis-(triethoxisilylpropyl)-Tetrasulfid.

Die Kautschukhilfsmittel werden in üblichen Mengen, die sich u.a. nach dem Verwendungszweck richten, eingesetzt. Übliche Mengen sind z. B. Mengen von 0,1-50 Gewichts-Teile, bezogen auf eingesetzte Mengen an Kautschuk (A).

Als Vernetzer können Schwefel, Schwefelspender, Peroxide oder Vernetzungsmittel, wie beispielsweise Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid und/oder Triallyltrimellitat, verwendet werden. Darüber hinaus kommen in Betracht die Acrylate und Methacrylate von mehrwertigen, vorzugsweise 2 bis 4-wertigen $C_2$- bis $C_{10}$-Alkoholen, wie Ethylenglykol, Propandiol-1,2-butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure und/oder Itaconsäure.

Die erfindungsgemäßen Kautschukmischungen können darüber hinaus Vulkanisationsbeschleuniger enthalten. Beispiele für geeignete Vulkanisationsbeschleuniger sind z.B. Mercaptobenzthiazole sowie -Sulfenamide, Guanidine, Thiurame, Dithiocarbamate, Thioharnstoffe, Thiocarbonate sowie Dithiophosphate. Die Vulkanisationsbeschleuniger, Schwefel und Schwefelspender oder Peroxide oder weitere Vernetzungsmittel, wie beispielsweise dimeres 2,4-Toluyliden-di-isocyanat (= Desmodur® TT) oder 1,4-bis-1-Ethoxyhydrochinon (= Vernetzer 30/10) werden in Mengen von 0,1-40 Gewichtsteile, bevorzugt 0,1-10 Gewichtsteile, bezogen auf die gesamte Menge an Kautschuk, eingesetzt.

Die Herstellung der erfindungsgemäßen Kautschukmischungen erfolgt durch Mischen der Einzelkomponenten in geeigneten Aggregaten, wie Walzen, Innenmischem oder auch Mischextrudern. Bevorzugte Mischtemperaturen liegen bei ca. 50-180°C.

Auch der Einsatz vorgefertigter Mischungen von Einzelkomponenten z. B. in der Form von Masterbatches ist möglich. Die Herstellung von Gel/Kautschuk-Masterbatches erfolgt beispielsweise im Latexzustand durch das Mischen der Latices unvernetzter Kautschuke und von Kautschukgelen. Die Isolierung der so hergestellten Masterbatchkomponenten kann wie üblich durch Eindampfen, Ausfällen oder Gefrierkoagulation erfolgen. Durch Einmischen weiterer Komponenten, wie Füllstoffen oder Phenolharzen in die Latexmischung und anschließende Aufarbeitung können geeignete Masterbatches sowie direkt die erfindungsgemäßen Kautschuk-Formulierungen erhalten werden.

Die Vulkanisation der erfindungsgemäßen Kautschukmischungen erfolgt bei Temperaturen von 100-250°C, bevorzugt 130-180°C, gegebenenfalls unter Druck von 10-200 bar.

Die Kautschukmischungen eignen sich insbesondere für die Herstellung technischer Gummiartikel und von Reifenbauteilen. Beispielsweise seien genannt: Walzenbeläge, Beläge von Förderbändern, Riemen, Spinnkopse, Dichtungen, Golfballkerne, Schuhsohlen, Wulstmischungen, Reifenkarkassen, Subtread-Mischungen und Reifenseitenwände. Besonders geeignet sind die Mischungen für die Herstellung verstärkter Seitenwände von Reifen mit Notlaufeigenschaften ("inserts for run flat tyres").

## **Beispiele**

Das für die Untersuchungen eingesetzte Kautschukgel wird entsprechend US-A 5 395 891 durch Vernetzung von Polybutadienlatices mittels Dicumylperoxid hergestellt. Charakteristische Daten des Kautschukgel sind in folgender Tabelle zusammengefasst:

| Gel | Gel-Typ | DCP-Menge [phr] | Durchmesser der Latexteilchen $d_{50}$ [nm] | Dichte der Latexteilchen [g/cm$^3$] | Gelgehalt [%] | QI [%] | Tg [°C] |
|---|---|---|---|---|---|---|---|
| A | BR | 1,0 | 116 | 0,9349 | 97 | 7,4 | -66,5 |

## Compoundherstellung, Vulkanisation und Ergebnisse

Es werden folgende Mischungen hergestellt und die Eigenschaftem der entsprechenden Vulkanisate bestimmt. Es wird gezeigt, dass durch Zusätze von Zinkperoxid das Produkt aus Spannungswert bei 100 % Dehnung und Bruchdehnung ($S_{100}$ x D) sowie die Reißfestigkeit verbessert wird. Durch den Zusatz von Zinkperoxid wird die Mischungsviskosität nicht signifikant verschlechtert.

| Mischungs-Nr.: | 1 | 2 | 3 | 4 | 5 |
|---|---|---|---|---|---|
| Naturkautschuk [1] | 100 | 100 | 100 | 100 | 100 |
| Gel A | 60 | 60 | 60 | 60 | 60 |
| Ruß N 330 | 2 | 2 | 2 | 2 | 2 |
| Koresin[2] | 4 | 4 | 4 | 4 | 4 |
| Rhenopol L[3] | 4 | 4 | 4 | 4 | 4 |
| Zinkoxid | 5 | 0 | 0 | 0 | 0 |
| Stearinsäure | 2 | 2 | 2 | 2 | 2 |
| TMQ [4] | 1,5 | 1,5 | 1,5 | 1,5 | 1,5 |
| 6PPD [5] | 2,5 | 2,5 | 2,5 | 2,5 | 2,5 |

| Mischungs-Nr.: | 1 | 2 | 3 | 4 | 5 |
|---|---|---|---|---|---|
| Schwefel | 5 | 2,5 | 2,5 | 2,5 | 1,5 |
| CBS [6] | 2 | 2 | 2 | 1 | 1,8 |
| Zinkperoxid [7] (ca. 55 %ig) | 0 | 9,1 | 18,2 | 9,1 | 18,2 |

[1]  = SMR 5 (Standard Malaysian Rubber)

[2]  = Kondensationsprodukt aus t-Butylphenol und Acetylen

[3]  = Weichmacher aus Mineralölbasis

[4]  = 2,2,4-Trimethyl-1,2-dihydrochinolin (Vulkanox® HS der Bayer AG)

[5]  = N-1,3-Dimethylbutyl-N′-phenyl-p-phenylendiamin (Vulkanox® 4020 NA der Bayer AG)

[6]  = N-Cyclohexyl-2-benzthiazylsulfenamid (Vulkacit® CZ der Bayer AG)

[7]  = Zinkperoxid ca. 55 %ig der Fa. Riedel-de Haen (enthält außerdem Zink-carbonat; Zinkoxid und Zinkhydroxid)

Zur Charakterisierung der Eigenschaften des unvernetzten Compounds werden folgende Messgrößen herangezogen: Mooneyviskosität ML 1+4 (100°C); Mooneyrelaxation MR 30 und Mooneyscorch bei 130°C.

| Mischungs-Nr.: | 1 | 2 | 3 | 4 | 5 |
|---|---|---|---|---|---|
| ML 1 + 4 (100°C) [ME] | 23,0 | 25,7 | 26,8 | 28,2 | 26,0 |
| MR 30 [%] | 1,3 | 1,9 | 3,4 | 3,5 | 3,5 |
| MS (130°C) | 30,0 | 31,0 | | | |

Das Vulkanisationsverhalten der Mischungen wird im Rheometer bei 160°C nach DIN 53 529 mit Hilfe des Monsantorheometers MDR 2000 E untersucht. Auf diese Weise wurden charakteristische Daten wie $F_a$, $F_{max}$, $t_{50}$ und $t_{90}$ bestimmt.

Nach DIN 53 529, Teil 3 bedeuten:

$F_a$:  Vulkameteranzeige im Minimum der Vernetzungsisotherme
$F_{max}$:  Maximum der Vulkameteranzeige
$t_{50}$:  Zeit, bei der 50 % des Umsatzes erreicht sind
$t_{90}$:  Zeit, bei der 90 % des Umsatzes erreicht sind

| Mischungs-Nr.: | 1 | 2 | 3 | 4 | 5 |
|---|---|---|---|---|---|
| $F_a$ [dNM] | 0,9 | 0,9 | 1,0 | 1,0 | 0,9 |
| $t_{50}$ [min.] | 4,2 | 5,6 | 6,0 | 6,2 | 6,4 |
| $t_{90}$ [min.] | 6,1 | 8,8 | 9,3 | 9,5 | 9,8 |
| $F_{max}$ [dNM] | 17,4 | 15,5 | 15,8 | 12,8 | 12,3 |

Auf der Basis o.g. Compounds werden nach 15 Min. Vulkanisationszeit bei 165°C folgende Prüfergebnisse erhalten:

| Mischungs-Nr.: | 1 | 2 | 3 | 4 | 5 |
|---|---|---|---|---|---|
| Zugfestigkeit [MPa] | 8,8 | 11,9 | 9,8 | 17,5 | 17,0 |
| Bruchdehnung [%] | 255 | 285 | 260 | 425 | 430 |
| Spannungswert bei 50 % Dehnung [MPa] | 1,0 | 1,0 | 1,1 | 0,9 | 0,8 |
| Spannungswert bei 100 % Dehnung [MPa] | 2,0 | 1,9 | 2,0 | 1,5 | 1,4 |
| Spannungswert bei 300 % Dehnung [MPa] | - | - | - | 8,7 | 8,3 |
| Härte Shore A, 23°C | 57 | 57 | 59 | 53 | 53 |
| Härte Shore A, 70°C | 57 | 57 | 58 | 53 | 52 |
| Rückprallelastizität, 23°C [%] | 67 | 70 | 67 | 63 | 63 |
| Rückprallelastizität, 70°C [%] | 83 | 81 | 75 | 72 | 72 |
| Goodrich Flexometer $\Delta$ T [°C] | 3,8 | 2,6 | 2,6 | 7,5 | 5,7 |
| Goodrich Flexometer T [°C] | 102,3 | 101,0 | 103,6 | 108,8 | 108,2 |
| tan δ/60°C | - | - | 0,021 | 0,032 | 0,0 |
| $S_{100}$ x D | 510 | 542 | 520 | 638 | 602 |

**Patentansprüche**

1. Kautschukmischungen aus mindestens einem doppelbindungshaltigen Kautschuk (A), mindestens einem Kautschukgel (B) sowie mindestens einem Metall-Peroxid (C), wobei der doppelbindungshaltige Kautschuk (A) in Mengen von 100 Gew.-Teilen, das Kautschukgel (B) in Mengen von 10 bis 150 Gew.-Teilen und das Peroxid (C) in Mengen von 0,1 bis 30 Gew.-Teilen vorhanden sind.

2. Kautschukmischungen nach Anspruch 1, **dadurch gekennzeichnet, dass** die doppelbindungehaltigen Kautschuke (A) NR, BR, SBR und SIBR sind.

3. Kautschukmischung nach Anspruch 1, **dadurch gekennzeichnet, dass** als Kautschukgele (B) solche auf Basis von BR, NR, SBR, NBR und CR eingesetzt werden.

**4.** Kautschukmischungen nach Anspruch 1, **dadurch gekennzeichnet, dass** als Komponente (C) Natriumperoxid, Calciumperoxid, Bariumperoxid und/oder Zinkperoxid eingesetzt werden.

**5.** Kautschukmischungen nach Anspruch 1, **dadurch gekenzeichnet, dass** die Metallperoxide (C) in phlegmatisierter Form eingesetzt werden.

**6.** Verwendung der Kautschukmischungen nach Anspruch 1 zur Herstellung von technischen Gummiartikeln und Reifenbauteilen.

**Claims**

**1.** Rubber mixtures of at least one double bond-containing rubber (A), at least one rubber gel (B) and at least one metal peroxide (C), wherein the double bond-containing rubber (A) is present in amounts of 100 parts by wt., rubber gel (B) is present in amounts of 10 to 150 parts by wt. and the peroxide (C) is present in amounts of 0.1 to 30 parts by wt.

**2.** Rubber mixtures according to claim 1, **characterised in that** the double bond-containing rubbers (A) are NR, BR, SBR and SIBR.

**3.** Rubber mixtures according to claim 1, **characterised in that**, as rubber gels (B), those based on BR, NR, SBR, NBR and CR are used.

**4.** Rubber mixtures according to claim 1, **characterised in that** sodium peroxide, calcium peroxide, barium peroxide and/or zinc peroxide are used as component (C).

**5.** Rubber mixtures according to claim 1, **characterised in that** metal peroxides (C) are used in the desensitized form.

**6.** Use of rubber mixtures according to claim 1 to produce industrial rubber articles and tyre components.

**Revendications**

**1.** Compositions de caoutchouc consistant en au moins un caoutchouc à double liaisons (A), au moins un gel de caoutchouc (B) et au moins un peroxyde métallique (C), le caoutchouc à double liaisons (A) étant présent en quantité de 100 parties en poids, le gel de caoutchouc (B) en quantité de 10 à 150 parties en poids, le peroxyde (C) en quantité de 0,1 à 30 parties en poids.

**2.** Compositions de caoutchouc selon revendication 1, **caractérisées en ce que** les caoutchoucs à double liaisons (A) sont des caoutchoucs NR, BR, SBR et SIBR.

**3.** Composition de caoutchouc selon revendication 1, **caractérisée en ce que** les gels de caoutchouc (B) sont à base de caoutchoucs BR, NR, SBR, NBR et CR.

**4.** Compositions de caoutchouc selon revendication 1, **caractérisées en ce que** le composant (C) consiste en peroxyde de sodium, peroxyde de calcium, peroxyde de baryum et/ou peroxyde de zinc.

**5.** Compositions de caoutchouc selon revendication 1, **caractérisées en ce que** les peroxydes métalliques (C) sont mis en oeuvre à l'état phlegmatisé.

**6.** Utilisation des compositions de caoutchouc selon revendication 1 pour la fabrication d'articles techniques en caoutchouc et de constituants de pneumatiques.